# EUROPEAN PATENT SPECIFICATION

(11) **EP 1 331 145 B1**
(45) Date of publication and mention of the grant of the patent: **30.08.2006**
(21) Application number: 02380256.4
(22) Date of filing: 10.12.2002
(51) Int. Cl.: B60R 19/18

(54) **Bumper for motor vehicles**
Stossfänger für Kraftfahrzeuge
Pare-chocs pour automobiles

(30) Priority: 17.01.2002 ES 200200107
(43) Date of publication of application: 30.07.2003
(73) Proprietor: Seat, S.A., 08040 Barcelona (ES)
(72) Inventor: Roma Marin, Joaquin, 08040 Barcelona (ES); Salvo Pagan, Josep, 08040 Barcelona (ES)
(74) Representative: Davila Baz, Angel

(56) References cited:
- EP-A- 1 036 715
- WO-A-01/28818
- GB-A- 2 322 602
- US-A- 4 029 350

## Description

The present invention relates to a bumper for motor vehicles, incorporated so that it acts as a protective element, not only for the occupants of the vehicle in the event of high-speed impact, but also for pedestrians or users of the public highway, in the event of low-speed impact.

Within the framework of a progressive involvement of vehicle manufacturers in the matter of passive safety (directed toward decreasing the risk on the part of occupants from suffering injury in the event of an accident), an ever-greater concern can be observed, both on the part of consumer associations and of the European bodies responsible for these matters, for the safety of pedestrians in the event of impact against a motor vehicle. Within the European ambit, there already exists a directive proposal, a future mandatory requirement, which envisages the performance of a series of tests on the front part of vehicles, the maximum results of which, in terms of a series of biomechanical parameters, should not surpass certain predetermined values. One of these tests or trials evaluates the damage produced by the impact of a vehicle moving at 40 km/h, on the lower extremities of a pedestrian after the latter has been knocked over.

On the other hand, the evolution of motor vehicle bodywork as regards classic passive safety, that is, in the event of impact between a vehicle and another object, which could be another vehicle, has led to increasingly rigid structures in the frontal area, which results in an increased risk of injury in impacts with other road users, such as cyclists and pedestrians. To reconcile both requirements (avoiding injury to the occupants in a severe collision and avoiding injury to pedestrians in a low-speed impact) is and will be an objective of the coming generations of vehicles.

A prior art bumper according to the preamble of claim 1 is disclosed in for instance WO 01 28818 A.

The object of the present invention is to reconcile the two requirements expounded above, on one hand providing a means of protection for the occupants of the vehicle, in the event of a severe impact, and on the other providing a means of protection for pedestrians and cyclists, in the event of an impact at low speed, considering as such speeds equal to or less than 40 km /hour.

To this end, in accordance with the present invention, in the front part of the vehicle is mounted a rigid structure, intended to serve as a protective element in the event of severe collision, whilst between this structure and the visible external wall located in front of this structure, a filling material is inserted deformable by the action of a low-speed impact (equal to or less than 40 km /hour), capable of absorbing the energy of the impact through said deformation.

The difficulty to be overcome when endeavouring to design a system which fulfils the previously expounded requirements is the little space available for locating the energy-absorbing elements, for impact against a pedestrian, in front of the rigid elements necessary for the stability of the structure in high-speed impact. One possibility would be to modify the lateral profile of the vehicle substantially, gaining the necessary distance toward the front, which would radically change the external appearance. A second possibility would consist in gaining space toward the interior, suppressing part of the elements which work in the absorption of severe impacts, with the subsequent risk and functional loss that this would imply.

A third way, that obtained through the present invention, consists in obtaining good protection for the pedestrians without modifying the internal structure of the vehicle and modifying the external profile minimally.

To this end, in accordance with the invention, between the actual rigid structure of the vehicle, intended to serve as a protective element in the event of severe impacts, and the visible external wall located in front of said structure, a filling of deformable material is mounted, capable of absorbing the energy of a low-speed impact, together with an impact-transferring cover which is located immediately in front of the filling, covering at least the front surface thereof, this cover being of less rigidity than that of the rigid structure, but greater than that of said filling.

This cover will preferably abut against the front surface of the filling of deformable material and will serve to prevent the deformation of said filling from being concentrated on a reduced portion, which corresponds to the incident surface of the impact, being but instead distributed over a greater surface, thereby allowing the necessary thickness of the filling of deformable material to be reduced.

The rigid structure can be constituted by two metallic profiles located at different height, one higher of greater cross-section and another lower of less, the filling of deformable material and the front cover thereof being mounted between the upper profile and the external wall of the bodywork or bumper.

The filling of deformable material can be constituted from a foam of an expanded thermoplastic material, whilst the cover can consist of a metallic sheet.

The characteristics and benefits of the invention can be better understood through the following description, made with reference to the drawings attached, wherein a non-restrictive example of embodiment is shown.

In the drawings:
Figure 1 is a vertical cross-section of the front part of the bodywork of a motor vehicle, wherein a possible embodiment is shown for reducing the impact against a pedestrian, when the vehicle is moving at speeds equal to or less than 40 km / hour.
Figure 2 is a horizontal section of the front part of the vehicle, taken according to cutting-plane line II-II of figure 1.
Figure 3 is a similar cross-section to figure 1, corresponding to the embodiment in accordance with the invention.
Figure 4 is a horizontal cross-section of the front part of the vehicle, taken according to cutting-plane line IV-IV of figure 3.

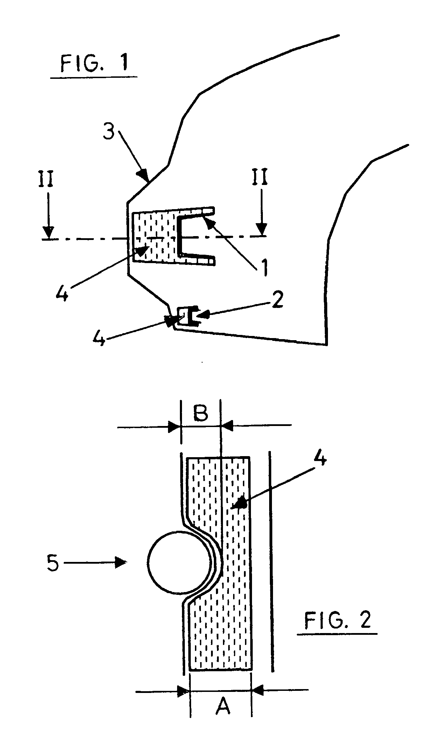

Figure 1 shows in vertical cross-section the front part of the bodywork of a vehicle which includes the bumper, which comprises a rigid structure consisting of two profiles or crosspieces with reference numbers 1 and 2, located at different height and of different cross-section. This rigid structure will serve as protective element for the occupants of the vehicle, in the event of impacts at cruising speeds, in any case greater than 40 km / hour. These profiles or crosspieces are covered by an external wall 3 which defines the visible surface.

Between profiles or crosspieces 1 and 2 and wall 3 is mounted a filling of deformable material 4, constituted for example of foam of an expanded thermoplastic material.

The thickness of this filling 4 will be sufficient so that in the event of impact 5, as is represented in figure 2, with the vehicle travelling at a speed equal to or less than 40 km / hour, the deformation which is produced in filling material 4 in the area coincident with impact 5, sufficiently absorbs the energy so that the effect on the pedestrian of said impact is cancelled or reduced.

To this end, filling 4 will have a thickness A greater than the depth of deformation B resulting from the effect of the impact. This requirement will necessitate the profile of the vehicle being modified substantially, so that front wall 3 is separated from profiles 1 and 2 by a distance the same as or slightly greater than the thickness A which the filling of deformable material 4 must have.

For the purpose of avoiding having to introduce this considerable modification in the profile of the vehicle, in accordance with the present invention, between filling 4 of deformable material and front wall 3 an impact-transferring cover 6 is mounted, at least in coincidence with upper profile 1 of greater cross-section. This cover abuts against or is near to the front surface of filling 4 and can be constituted by a metallic sheet, the rigidity of which being less than that of profiles 1 and 2 which form the rigid structure, but greater than that of filling 4.

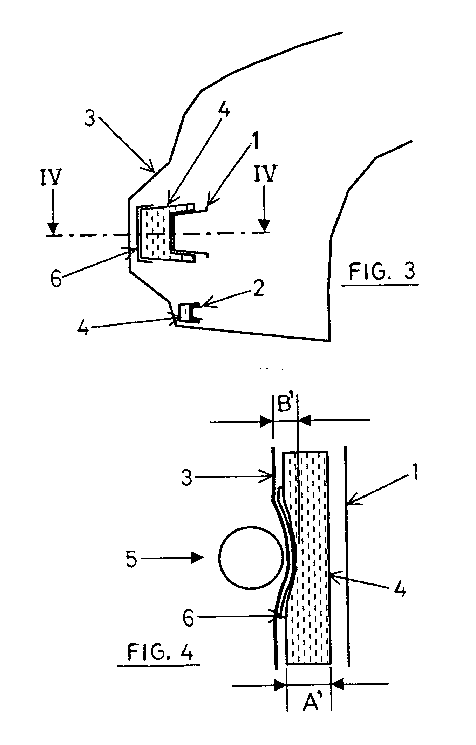

The effect achieved with this cover 6 is that the pressure applied on filling 4 as a consequence of impact 5 is distributed over a greater surface area, as is shown in figure 4, whereby the deformation in depth of said filling is much less than if said protective cover was lacking, as in the embodiments of figures 1 and 2.

With the constitution described, it is achieved that the deformation is not concentrated on a reduced area, coincident with that of impact 5, as occurs in figure 2, but instead it occurs over a much wider surface, as is shown in figure 4, thereby reaching a smaller depth.

As is shown in figure 4, as depth B' of the deformation is much less than deformation B of figure 2, the necessary thickness A' of filling 4 will also be rather less than the necessary thickness with the embodiment of figure 2. All this signifies that it will be practically unnecessary to modify the vertical contour of front wall 3, that is, the described composition of the bumper can be arranged without modifying appreciably the external outline of the vehicle.

The lower profile or crosspiece 2 of the rigid structure can include only the filling of deformable material 4, since usually the impact with a pedestrian or cyclist will usually take place through the most prominent front surface which corresponds to the portion of wall 3 located immediately in front of upper profile or crosspiece 1.

As may be appreciated in figure 3, protective cover 6 can partially enclose filling 4 and preferentially it will extend over the full length thereof.

## Claims

1. - Bumper for motor vehicles, which comprises a rigid structure (1, 2), not deformable by a low-speed impact, which is hidden by an external wall (3) which defines the visible surface, whereby between the rigid structure and the external wall is mounted a filling of deformable material (4), capable of absorbing the energy of a low-speed impact, **characterized in that** also an impact-transferring cover (6) is mounted between the rigid structure (1, 2) and the external wall (3), which is located immediately in front of the filling (4), covering the front surface thereof, which cover (6) is of less rigidity than that of the rigid structure (1, 2), but greater than that of said filling (4).

2. - Bumper according to the claim 1, **characterised in that** the rigid structure is constituted by two metallic profiles (1,2) located at different height, one (1) upper of greater cross-section and another (2) lower of smaller cross-section, the filling of deformable material being mounted in front of the two profiles, whilst the transferring cover is mounted in front of the filling which covers the upper profile frontally.

3. - Bumper according to the previous claims, **characterised in that** the filling of deformable material is constituted from foam of an expanded thermoplastic material and the aforementioned cover is of sheet metal.

## Patentansprüche

1. Stoßfänger für Kraftfahrzeuge
- mit einem steifen Aufbau (1, 2), der durch einen Aufprall mit niedriger Geschwindigkeit nicht verformbar ist und der durch eine Außenwand (3) verdeckt ist, welche die Sichtfläche bildet,
- wobei zwischen dem steifen Aufbau und der Außenwand eine Füllung (4) aus verformbarem Material angeordnet ist, die in der Lage ist, die Energie eines Aufpralls mit geringer Geschwindigkeit zu absorbieren,
**dadurch gekennzeichnet,**
- **dass** zwischen dem steifen Aufbau (1, 2) und der Außenwand (3) auch eine stoßübertragende Abdeckung (6) angebracht ist,
-- die unmittelbar vor der Füllung (4) positioniert ist und deren Frontfläche abdeckt und
-- die eine geringere Steifigkeit als der steife Aufbau (1, 2), jedoch eine größere Steifigkeit als die Füllung (4) hat.

2. Stoßfänger nach Anspruch 1, **dadurch gekennzeichnet,**
- **dass** der steife Aufbau von zwei Metallprofilen (1, 2) gebildet wird, die sich auf unterschiedlichen Höhen befinden,
- wobei das eine (1) obere einen größeren Querschnitt und das andere (2) untere einen kleineren Querschnitt hat,
- wobei die Füllung aus verformbarem Material vor den beiden Profilen angebracht ist und
- wobei die übertragende Abdeckung vor der Füllung angebracht ist, die das obere Profil frontal abdeckt.

3. Stoßfänger nach den vorhergehenden Ansprüchen, **dadurch gekennzeichnet, dass** die Füllung aus verformbarem Material von einem Schaum aus einem expandierten thermoplastischen Material und die Abdeckung von Metallblech gebildet wird.

## Revendications

1. Pare-choc pour automobiles, qui comprend une structure rigide (1,2) non déformable par un choc à vitesse lente, qui est cachée par une paroi externe (3) qui définit la surface visible, et dans lequel entre la structure rigide et la paroi externe est monté un remplissage de matériau déformable (4), capable d'absorber l'énergie d'un choc à vitesse lente, **caractérisé en ce qu'**également un capot (6) de transfert de choc est monté entre la structure rigide (1, 2) et la paroi externe (3), lequel est situé immédiatement en face du remplissage (4), en recouvrant la surface avant de celui-ci, lequel capot (6) a une rigidité moindre que la structure rigide (1, 2), mais plus grande que celle dudit remplissage (4).

2. Pare-choc selon la revendication 1, **caractérisé en ce que** la structure rigide est constituée par deux profilés métalliques (1, 2) situés à une hauteur différente, l'un (1), le plus haut, de plus grande section transversale, et l'autre (2), le plus bas, de plus petite section transversale, le remplissage de matériau déformable étant monté en face des deux profilés, alors que le capot de transfert est monté en face du remplissage qui recouvre le profilé le plus haut de manière frontale.

3. Pare-choc selon les revendications précédentes, **caractérisé en ce que** le remplissage de matériau déformable est constitué d'une mousse d'une matière thermoplastique expansée et le capot mentionné précédemment est en tôle.
